# EUROPÄISCHE PATENTSCHRIFT

(11) **EP 3 504 452 B1**
(45) Veröffentlichungstag und Bekanntmachung des Hinweises auf die Patenterteilung: **14.04.2021**
(21) Anmeldenummer: 17755079.5
(22) Anmeldetag: 03.08.2017
(51) Int. Cl.: F16D 1/10, A47J 43/08

(54) **GERÄUSCHREDUZIERENDE KÜCHENGERÄTEKUPPLUNG**
NOISE-REDUCING KITCHEN APPLIANCE COUPLING
ACCOUPLEMENT POUR USTENSILE DE CUISINE PERMETTANT UNE RÉDUCTION DES BRUITS

(30) Priorität: 26.08.2016 DE 102016216102
(43) Veröffentlichungstag der Anmeldung: 03.07.2019
(73) Patentinhaber: BSH Hausgeräte GmbH, 81739 München (DE)
(72) Erfinder: STERGAR, David, 3342 Gornji Grad (SI); KOREN, Peter, 3331 Nazarje (SI); JEGRISNIK, Uros, 3313 Polzela (SI)
(86) Internationale Anmeldenummer: PCT/EP2017/069627
(87) Internationale Veröffentlichungsnummer: WO 2018/036779

(56) Entgegenhaltungen:
- WO-A1-2009/121154
- FR-A3- 2 789 282
- US-A- 3 596 692
- US-A1- 2015 075 392

## Beschreibung

Die vorliegende Erfindung betrifft eine Kupplung zur Übertragung von Drehbewegungen in einem elektromotorischen Küchengerät. Die Erfindung betrifft zudem eine Küchengerätekomponente zum Anschluss an ein Küchengerät mit einem Elektromotor sowie ein Küchengerät mit einem Elektromotor und einer lösbaren Küchengerätekomponente mit Kupplung.

In elektromotorischen Küchengeräten wie beispielsweise Rühr- oder Zerkleinerungsgeräten werden zur Übertragung von Drehbewegungen bzw. -momenten zwischen Wellen gemeinhin Kupplungen verwendet. Kupplungen können starr oder lösbar ausgebildet sein, und sie können Wellen mit gleicher oder mit verschiedenen Drehachsen verbinden.

Zur effizienten Übertragung von Drehbewegungen ist die Verwendung von relativ harten Materialien für Kupplungen vorteilhaft. Allerdings führen die im Betrieb auftretenden Vibrationen bei derartigen Materialien zu einer starken Geräuschentwicklung.

Aus diesem Grunde werden in der Regel Kupplungen mit Elementen aus mindestens zwei verschiedenen Materialien verwendet, von denen die Elemente aus einem härteren Material zur Übertragung der Drehbewegungen dienen und die Elemente aus einem weicheren Material zur Dämpfung der Vibrationen und damit zur Geräuschverminderung.

Derartige Kupplungen aus mehreren Materialien sind jedoch aufwendig in der Herstellung und insbesondere im Kontaktbereich der Materialien anfällig für Defekte.

Die Druckschrift US 3 596 692 A offenbart einen Standmixer mit einem anzutreibenden Kupplungselement, das lösbar mit einer anzutreibenden Welle zu verbinden ist und Speichenelemente aufweist, die sich von einer Bohrung zu einem Außenring des Kupplungselements erstrecken. Zwischen den Speichenelementen können Antriebselemente einer motorseitigen Kupplung eingreifen.

Die vorliegende Erfindung hat die Aufgabe, eine Technik bereitzustellen, die eine Übertragung von Drehbewegungen bei geringer Geräuschentwicklung mit einer gleichwohl einfach herzustellenden und wenig anfälligen Kupplung ermöglicht.

Die Erfindung wird gelöst durch eine Kupplung gemäß Anspruch 1, eine Küchengerätekomponente gemäß Anspruch 8 und ein Küchengerät gemäß Anspruch 9. Vorteilhafte Ausführungsformen sind in den Unteransprüchen, der Beschreibung und den Figuren offenbart.

Eine erfindungsgemäße Kupplung dient einer Übertragung einer durch einen Elektromotor in einem Küchengerät (beispielsweise einem Standmixer oder einer Saftpresse) bewirkten (angetriebenen) Drehbewegung auf eine (vorzugsweise lösbare) Küchengerätekomponente. Sie kann beispielsweise dazu vorgesehen sein, in einen Fuß einer Küchengerätekomponente oder in einen elektromotorseitigen Sockel des Küchengeräts eingesetzt zu werden, auf den eine Küchengerätekomponente aufgesetzt werden kann.

Die Kupplung umfasst einen Innenkranz, der dazu eingerichtet ist, eine Welle des Küchengeräts, insbesondere eine Welle der Küchengerätekomponente oder eine vom Elektromotor angetriebene Welle verdrehfest einzufassen. Sofern nichts anderes genannt ist, beziehen sich die Angaben "radial", "axial" und "Umfangsrichtung" in dieser Schrift stets auf die (vorgesehene) Rotationsachse dieser (vorgesehenen) Welle.

Die Kupplung umfasst weiterhin einen Außenkranz, der koaxial um den Innenkranz herum angeordnet ist. Innenkranz und Außenkranz sind durch Verbindungswände miteinander verbunden.

Zudem umfasst die Kupplung eine Mehrzahl an Kraftübergangselementen, die dazu eingerichtet sind, zur Übertragung der Drehbewegung mit entsprechenden Gegenelementen in Wirkverbindung zu treten. Derartige Kraftübergangselemente können beispielsweise einen oder mehrere Zapfen und/oder Kuppel(n) umfassen, die dazu eingerichtet sein können, in die Gegenelemente einzugreifen oder die umgekehrt Zwischenräume ausbilden, in welche die Gegenelemente eingreifen können. Die Mehrzahl kann z.B. drei, vier, fünf, sechs, sieben, acht oder mehr derartige Kraftübergangselemente umfassen.

Die Kraftübergangselemente sind jeweils durch mindestens eine Haltewand mit dem äußeren Ring verbunden; zwischen Kraftübergangselement und Außenkranz liegen die jeweiligen Haltewände vorzugsweise frei.

Die Haltewände und/oder die Verbindungswände sind flexibel ausgebildet, und zwar die Haltewände in radialer Richtung, die Verbindungswände dagegen in Umfangsrichtung (also in und/oder entgegen einer (vorgesehenen) Rotationsrichtung). Als "flexibel in radialer Richtung" wird dabei in dieser Schrift eine Nachgiebigkeit bei Krafteinwirkung (insbesondere durch Vibrationen) in radialer Richtung verstanden, als "flexibel in Umfangsrichtung" analog eine Nachgiebigkeit bei Krafteinwirkung in Umfangsrichtung.

Die Geometrie der Kupplung und die Halte- bzw. Verbindungswände bewirken im Betrieb eine Absorption und damit Dämpfung auftretender Vibrationen, ohne dass dafür eine Herstellung aus mehreren Materialien erforderlich wäre. Sofern die Haltewände in radialer Richtung flexibel sind, können insbesondere radiale Komponenten von Vibrationen absorbiert werden, sofern die Verbindungswände in Umfangsrichtung flexibel sind, können analog Vibrationskomponenten in Umfangsrichtung absorbiert werden. Somit wird im Betrieb eine lediglich geringe Geräuschentwicklung erreicht.

Gemäß einer vorteilhaften Ausführungsform ist mindestens eines (vorzugsweise mindestens vier oder sogar alle) der Kraftübergangselemente durch zwei der Haltewände mit dem Außenkranz verbunden, wobei die beiden Haltewände in Umfangsrichtung zueinander versetzt am Außenkranz angeordnet, vorzugsweise monolithisch in kontinuierlichem Materialübergang angeformt sind.

Die beiden Haltewände schließen somit zusammen mit dem jeweiligen Kraftübergangselement und dem Abschnitt des Außenkranzes, um den versetzt die Enden angeformt sind, einen Hohlraum ein. Dies ermöglicht eine Flexibilität in radialer Richtung bei relativ großer Stabilität bei Krafteinwirkung in Umfangsrichtung, was eine gute Drehbewegungsübertragung gewährleistet.

Insbesondere können die beiden Haltewände bei der genannten Ausführungsform unterschiedlich geformt sein und/oder in unterschiedlichem Winkel am Außenkranz ansetzen. Dadurch können sie sich in vorteilhafter Weise gegenseitig bei Krafteinwirkung in Umfangsrichtung stabilisieren.

Gemäß einer vorteilhaften Ausführungsform haben die Haltewände und/oder die Verbindungswände jeweils in mindestens einem Abschnitt eine Stärke, die mindestens 1 mm und/oder höchstens 4mm, bevorzugter mindestens 1,5mm und/oder höchstens 3mm beträgt; (gemessen in einem Querschnitt senkrecht zur (vorgesehenen) Rotationsachse). Dadurch kann eine günstige Flexibilität und gleichwohl ausreichende Stabilität erreicht werden.

In axialer Richtung erstrecken sich die Haltewände vorzugsweise über mindestens 1 cm bevorzugter über mindestens 1,5 cm. Dies ermöglicht zum einen eine vorteilhafte Stabilität bei Krafteinwirkung in Umfangsrichtung und zum anderen eine gute Haltbarkeit der Kupplung.

Die Kraftübergangselemente sind vorzugsweise alle an derselben Seite (in axialer Richtung betrachtet) der Kupplung angeordnet. Vorteilhafterweise ragen die Kraftübergangselemente dabei in axialer Richtung über einen axialen Rand des Außenkranzes (an derselben Seite) hinaus; als "axialer Rand" einer Komponente der Kupplung (also des Außenkranzes, des Innenkranzes, einer Halte- oder einer Verbindungswand) wird dabei in dieser Schrift ein Rand bezeichnet, bis zu dem sich die jeweilige Komponente an einer Seite der Kupplung in axialer Richtung erstreckt. Mit dem genannten Hinausragen kann auf besonders günstige Weise die Wirkverbindung mit den Gegenelementen, insbesondere ein Eingreifen von Kraftübergangselementen und Gegenelementen ineinander ermöglicht werden. Der axiale Rand des Innenkranzes ist an dieser Seite der Kupplung vorzugsweise in die entgegengesetzte Richtung (in einen vom Außenkranz umgebenen Bereich hinein) versetzt angeordnet. Dies erlaubt (beim Anschluss der Kupplung) ein entsprechend tiefes Eindringen der Gegenelemente in diesem Bereich und damit eine große Angriffsfläche von Gegenelementen und Kraftübergangselementen aneinander.

Eine vorteilhafte Dämpfung von Vibrationen wird insbesondere begünstigt bei einer Ausführungsform, bei der die Kraftübergangselemente vom Innenkranz getrennt sind, ein Materialübergang vom Innenkranz zu den Kraftübergangselementen also nur entlang den Verbindungswänden, einem Abschnitt des Außenkranzes und einer jeweiligen Haltewand vorliegt: Neben der Flexibilität der Haltewände in radialer Richtung begünstigt dies eine vorteilhafte Nachgiebigkeit der Kraftübergangselemente in radialer Richtung.

Gemäß einer Ausführungsform einer erfindungsgemäßen Kupplung erstrecken sich die Verbindungswände in axialer Richtung weniger weit als die Haltewände. Auf diese Weise kann mittels der relativ geringen Breite der Verbindungswände deren vorteilhafte Flexibilität in Umfangsrichtung erreicht und umgekehrt mittels der relativ großen Breite der Haltewände deren vorteilhafte Stabilität in Umfangsrichtung bewirkt werden.

Die axialen Ränder der Haltewände und/oder der Verbindungswände können jeweils mit einem (an derselben Seite der Kupplung liegenden, analog definierten) axialen Rand des Außenkranzes in einer Ebene liegen oder in axialer Richtung (vorzugsweise nach innen, also in einen vom Außenkranz umgebenen Bereich hinein) versetzt sein. Die erstgenannte Variante erlaubt eine vereinfachte Herstellung der Kupplung, die zweite ermöglicht die Verwendung eines besonders breiten Außenkranzes und damit eine besonders stabile Einfassung der Kupplung.

Vorzugsweise liegen an einer Seite der Kupplung die axialen Ränder der Haltewände in einer gemeinsamen, ersten Rotationsebene (also einer Ebene, zu der die (vorgesehene) Rotationsachse senkrecht steht). Analog liegen die axialen Ränder der Verbindungswände an der Seite der Kupplung vorzugsweise in einer gemeinsamen, zweiten Rotationsebene. Die erste und die zweite Rotationsebene können dabei gleich oder verschieden sein.

Insbesondere vorteilhaft ist eine Ausführungsform, bei der an der Seite der Kupplung, an der die Kraftübergangselemente angeordnet sind, der axiale Rand des Innenkranzes in einen vom Außenkranz umgebenen Bereich hinein versetzt und mit den axialen Rändern der Verbindungselementen in einer Rotationsebene liegt, wohingegen die axialen Ränder der Haltewände mit dem axialen Rand des Außenkranzes in einer Rotationsebene liegen.

Im Bereich des Innenkranzes ist bei einer derartigen Ausführungsform somit vorteilhaft Raum zur Aufnahme der Gegenelemente, und die in axialer Richtung relativ schmalen Verbindungswände sind in Umfangsrichtung vorteilhaft flexibel, wohingegen die relativ breiten Haltewände bei Krafteinwirkung in Umfangsrichtung relativ stabil sind.

Vorteilhaft ist eine Ausführungsform einer erfindungsgemäßen Kupplung, bei der alle oder ein Teil der Verbindungswände jeweils einen wellenartig geschwungenen Querschnitt (entlang einer Rotationebene) aufweisen. Auf diese Weise sind die Verbindungswände relativ lang ausgebildet, und es ergibt sich bei einer Drehung von Innenkranz und Außenkranz relativ zueinander ein Spielraum, der die vorteilhafte Flexibilität der Verbindungswände in Umfangsrichtung bewirkt bzw. verstärkt.

Insbesondere kann bei einer derartigen Verbindungswand der radiale Abstand zum Außenkranz - ausgehend vom Innenkranz entlang dem Querschnitt - in einem Abschnitt streng monoton fallen und dann in einem anderen Abschnitt streng monoton wachsen. Dadurch wird eine besonders ausgeprägte Wellenform und damit eine besonders große Länge der jeweiligen Verbindungswand erreicht.

Gemäß einer bevorzugten Ausführungsform einer erfindungsgemäßen Kupplung bestehen der Innenkranz, der Außenkranz, die Verbindungswände und die Haltewände alle aus demselben einheitlichen Material. Ein derartiges Material kann beispielsweise ein Kunststoff, insbesondere ein Thermoplast sein. Vorzugsweise ist die Kupplung monolithisch ausgebildet.

Ein entsprechendes Herstellungsverfahren kann ein Spritzgussverfahren, ein generatives Fertigungsverfahren und/oder Fräseschritte umfassen.

Eine erfindungsgemäße Küchengerätekomponente umfasst ein Rotationswerkzeug zum Bearbeiten von Lebensmitteln und ist dazu eingerichtet, (vorzugsweise lösbar und von einem Verwender) an einen Elektromotor eines Küchengeräts angeschlossen zu werden; ein derartiges Küchengerät kann insbesondere beispielsweise eine Küchenmaschine oder ein Standmixer sein.

Die Küchengerätekomponente umfasst eine erfindungsgemäße Kupplung gemäß einer der in dieser Schrift offenbarten Ausführungsformen. Die Kupplung ist dazu eingerichtet, im angeschlossenen Zustand der Küchengerätekomponente eine Drehbewegung des Elektromotors auf das Rotationswerkzeug zu übertragen.

Ein erfindungsgemäßes Küchengerät umfasst einen Elektromotor und eine erfindungsgemäße Küchengerätekomponente (gemäß einer der in dieser Schrift offenbarten Ausführungsformen). Die Küchengerätekomponente ist an den Elektromotor angeschlossen oder dazu eingerichtet, (vorzugsweise lösbar und von einem Verwender) an den Elektromotor angeschlossen zu werden.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt.

Es zeigen schematisch:
- Figur 1:: eine Kupplung gemäß einer exemplarischen Ausführungsform der vorliegenden Erfindung in perspektivischer Ansicht;
- Figur 2:: eine erfindungsgemäße Kupplung gemäß einem alternativen Ausführungsbeispiel in einem Querschnitt entlang einer Rotationsebene; und
- Figur 3:: eine schematische Ansicht eines exemplarischen erfindungsgemäßen Küchengeräts in einem Querschnitt entlang einer vorgesehenen Rotationsachse.

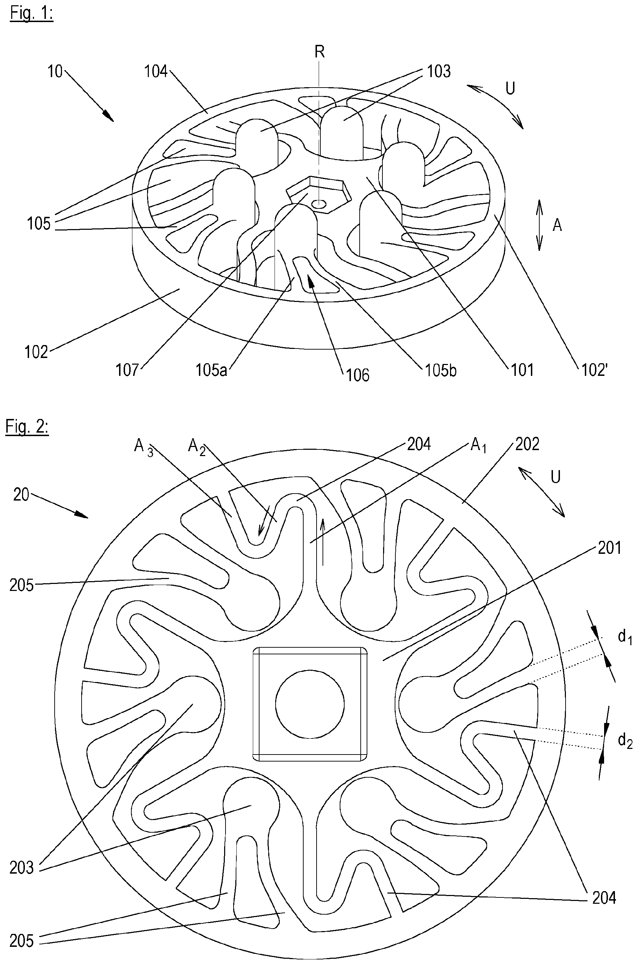

In Figur 1 ist in perspektivischer Ansicht eine exemplarische erfindungsgemäße Kupplung 10 schematisch dargestellt. Die Kupplung 10 umfasst einen Innenkranz 101, einen den Innenkranz koaxial umgebenden Außenkranz 102 und eine Mehrzahl an (vorliegend sechs) Kraftübergangselementen 103, die dazu eingerichtet sind, zur Übertragung einer Drehbewegung mit jeweiligen von einem Elektromotor angetriebenen Gegenelementen in Wirkverbindung zu treten (nicht gezeigt). Im dargestellten Beispiel sind die Kraftübergangselementen 103 kuppelartig ausgebildet.

Der Innenkranz 101 weist eine Fassung 107 auf, die dazu eingerichtet ist, eine mindestens teilweise durch den Innenkranz hindurchführende Welle des Küchengeräts an einem Ende verdrehfest einzufassen, um so eine Übertragung einer Drehbewegung mittels der Kraftübergangselemente 103 zu ermöglichen. Eine vorgesehene Rotationsrichtung der Welle ist in der Figur 1 mit R bezeichnet, eine zugehörige axiale Richtung mit A (vorzeichenunabhängig als Doppelpfeil).

Innenkranz 101 und Außenkranz 102 sind über Verbindungswände 104 miteinander verbunden, die sich geschwungen (insbesondere) in radialer Richtung erstrecken.

Die Kraftübergangselemente 103 sind im dargestellten Ausführungsbeispiel über Haltewände 105 mit dem Außenkranz 102 verbunden. Vom Innenkranz 101 hingegen sind die Kraftübergangselemente 103 getrennt, ein Materialübergang vom Innenkranz 101 zu den Kraftübergangselementen 103 liegt also nur entlang den Verbindungswänden 104, einem Abschnitt des Außenkranzes 102 und einer jeweiligen Haltewand 105 vor. Diese Trennung vom Innenkranz 101 begünstigt zusammen mit der radialen Flexibilität der Haltewände eine Nachgiebigkeit der Kraftübergangselemente bei Krafteinwirkung in radialer Richtung und damit im Betrieb eine Dämpfung radialer Komponenten von Vibrationen.

Jedes Kraftübergangselement 103 ist im gezeigten Ausführungsbeispiel durch zwei Haltewände mit dem Außenkranz 102 verbunden, die in Umfangsrichtung U versetzt zueinander am Außenkranz 102 angeordnet sind. Die exemplarisch bezeichneten Haltewände 105a und 105b schließen somit zusammen mit dem jeweiligen Kraftübergangselement 103 und dem Abschnitt des Außenkranzes, um den versetzt die Enden angeordnet sind, einen Hohlraum 106 ein. Dies ermöglicht die radiale Flexibilität bei zugleich relativ großer Stabilität in Umfangsrichtung U, die eine gute Übertragung einer Drehbewegung gewährleistet.

Der in der Darstellung der Figur 1 sichtbare axiale Rand 102' des Außenkranzes 102 und die sichtbaren axialen Ränder der Haltewände 105 liegen in einer gemeinsamen (ersten) Rotationsebene, über welche die kuppelartigen Kraftübergangselemente 103 im vorliegenden Beispiel in axialer Richtung A hinausragen. Analog liegen die axialen Ränder der Verbindungswände 104 und des Innenkranzes 101 in einer gemeinsamen (zweiten) Rotationsebene. Gegenüber der ersten Rotationsebene ist die zweite Rotationsebene in axialer Richtung A versetzt, und zwar entgegengesetzt zur Versetzungsrichtung der Kraftübergangselemente 103. Der axiale Rand des Innenkranzes 101 wird somit vom Außenkranz 102 umlaufen, und es ergibt sich zwischen den Kraftübergangselementen 103 und dem axialen Rand des Innenkranzes ein vorteilhaft großer Raum zur Aufnahme von entsprechenden Gegenelementen.

Die Kupplung 10 ist monolithisch aus einem durchgehenden Material ausgebildet, beispielsweise aus einem Kunststoff, insbesondere einem Thermoplast.

In Figur 2 ist eine alternative Ausführungsform einer erfindungsgemäßen Kupplung 20 in einem Querschnitt entlang einer Rotationsebene (also orthogonal zur vorgesehenen Rotationsache) dargestellt. Die Kupplung 20 umfasst einen Innenkranz 201 und einen Außenkranz 202, die miteinander durch Verbindungswände 204 verbunden sind. Die Kupplung 20 umfasst ferner (vorliegend wiederum sechs) Kraftübergangselemente 203, die über je zwei Haltewände 205 mit dem Außenkranz 202 verbunden sind. Zwischen Kraftübergangselement und Außenkranz liegen die jeweiligen Haltewände frei, sind dort also von Hohlräumen umgeben. Bei radialer Krafteinwirkung von innen nach außen können die Haltewände somit nachgeben, sind also in radialer Richtung flexibel.

Die Haltewände 205 haben jeweils eine im Wesentlichen gleichmäßige Stärke d₁, und die Verbindungswände 204 haben jeweils im Wesentlichen durchgängig die Stärke d₂. Im gezeigten Beispiel ist d₁<d₂, die besonders dünnen Verbindungswände sind dadurch in Umfangsrichtung besonders flexibel. Vorzugsweise betragen d₁ und/oder d₂ mindestens 1mm und/oder höchstens 4mm, bevorzugter mindestens 1,5mm und/oder höchstens 3mm.

Im Vergleich zur in der Figur 1 dargestellten Kupplung 10 weisen die Verbindungswände 204 im Querschnitt eine ausgeprägtere Wellenform auf. Insbesondere umfassen die Verbindungswände jeweils einen Abschnitt A₁, einen Abschnitt A₂ und einen Abschnitt A₃. In der angegebenen Pfeilrichtung (ausgehend vom Innenkranz entlang der jeweiligen Verbindungswand 204) nimmt dabei der radiale Abstand zum Außenkranz im Abschnitt A₁ streng monoton ab, im Abschnitt A₂ wächst er streng monoton und nimmt schließlich im Abschnitt A₃ wieder streng monoton ab, bis der Außenkranz erreicht ist.

Mit dieser starken Wellenform sind die Verbindungswände 204 zwischen Innen- und Außenkranz besonders lang, was ihre Flexibilität in Umfangsrichtung U begünstigt.

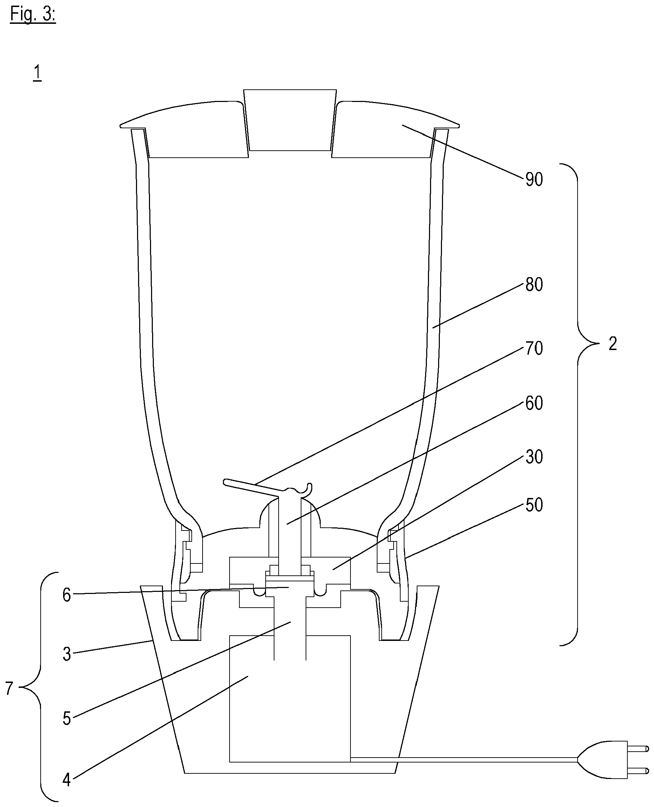

In Figur 3 ist ein axialer Querschnitt durch ein exemplarisches Küchengeräts 1 gemäß einer Ausführungsform der vorliegenden Erfindung vereinfacht dargestellt; beim gezeigten Beispiel handelt es sich um einen Standmixer, der einen Sockel 7 und eine Mixerkomponente 2 umfasst, die als erfindungsgemäße Küchengerätekomponente ausgebildet ist. Die Mixerkomponente 2 umfasst einen Behälter 80 mit einem Deckel 90 sowie einen vom Behälter ablösbaren Fuß 50, der vorliegend auf den Sockel 7 aufgesetzt ist und in dem eine erfindungsgemäße Kupplung 30 angeordnet ist. Die Kupplung 30 fasst eine Welle 60 an deren einem Ende ein: Am anderem Ende der Welle ist ein Rotiermesser 70 zur Bearbeitung (z.B. zur Zerkleinerung oder zum Verrühren) von Lebensmitteln angeordnet.

Der Sockel 7 weist ein Sockelgehäuse 3 auf, das einen Elektromotor 4 umgibt. Der Elektromotor 4 ist dazu eingerichtet, die Rotation einer Sockelwelle 5 anzutreiben. An der Welle 5 ist ein Gegenelement 6 zum Eingriff in die erfindungsgemäße Kupplung 30 angeordnet, über die somit die vom Elektromotor angetriebene Rotation auf das Rotiermesser übertragen werden kann.

Aufgrund der (in dieser Figur nicht erkennbaren) erfindungsgemäßen Ausbildung der Kupplung 30 werden bei einer derartigen Übertragung auftretende Vibrationen gedämpft, so dass eine Geräuschentwicklung gering bleibt.

Eine erfindungsgemäße Kupplung 10, 20, 30 umfasst einen Innenkranz 101, 201, einen Außenkranz 102, 202, der den Innenkranz koaxial umgibt und mit diesem durch Verbindungswände 104, 105 verbunden ist, sowie eine Mehrzahl an Kraftübergangselementen 103, 203. Die Kraftübergangselementen 103, 203 sind mit dem Außenkranz durch Haltewände 105, 205 verbunden und dazu eingerichtet, zur Übertragung von Drehbewegungen mit jeweiligen von einem Elektromotor angetriebenen Gegenelementen in Wirkverbindung zu treten. Die Haltewände 105, 205 sind in radialer und/oder die Verbindungswände 104, 204 in Umfangsrichtung flexibel ausgebildet.

Eine erfindungsgemäße Küchengerätekomponente 2 umfasst eine erfindungsgemäße Kupplung.
Ein erfindungsgemäßes Küchengerät 1 umfasst einen Elektromotor 4 und eine erfindungsgemäße Küchengerätekomponente 2.

### Bezugszeichen

- 1: Küchengerät
- 2: Küchengerätekomponente
- 3: Sockelgehäuse
- 4: Elektromotor
- 5: Sockelwelle
- 6: Gegenelement
- 7: Sockel

- 10, 20, 30: Kupplung

- 50: Fuß
- 60: Welle
- 70: Rotiermesser
- 80: Behälter
- 90: Deckel

- 101, 201: Innenkranz
- 102,202: Außenkranz
- 103,203: Kraftübergangselement
- 104, 204: Verbindungswand
- 105, 105a, 105b, 205: Haltewand
- 106: Hohlraum
- 107: Fassung

- A: axiale Richtung
- A₁, A₂, A₃: Abschnitt einer Verbindungswand
- d₁: Stärke einer Haltewand
- d₂: Stärke einer Verbindungswand
- R: (vorgesehene) Rotationsachse
- U: Umfangsrichtung

## Patentansprüche

1. Kupplung (10, 20, 30) für ein Küchengerät mit Elektromotor, zur Übertragung einer vom Elektromotor bewirkten Drehbewegung auf eine Küchengerätekomponente, wobei die Kupplung umfasst:
- einen Innenkranz (101, 201), der dazu eingerichtet ist, eine Welle des Küchengeräts verdrehfest einzufassen;
- einen Außenkranz (102, 202), der koaxial um den Innenkranz (101, 201) herum angeordnet ist und der mit dem Innenkranz durch Verbindungswände (104, 204) verbunden ist; **dadurch gekennzeichnet, dass** -eine Mehrzahl an Kraftübergangselementen (103, 203), die dazu eingerichtet sind, zur Übertragung der Drehbewegung mit jeweiligen Gegenelementen in Wirkverbindung zu treten, und die jeweils durch mindestens eine Haltewand (105, 105a, 105b, 205) mit dem Außenkranz (102, 202) verbunden sind;
wobei die Haltewände (105, 105a, 105b, 205) in radialer Richtung flexibel und/oder wobei die Verbindungswände (104, 204) in Umfangsrichtung (U) flexibel ausgebildet sind.

2. Kupplung gemäß Anspruch 1, wobei mindestens eines der Kraftübergangselemente (103, 203) durch zwei der Haltewände (105a, 105b) mit dem Außenkranz (102, 202) verbunden ist, wobei die beiden Haltewände in Umfangsrichtung (U) zueinander versetzt am Außenkranz angeordnet sind.

3. Kupplung gemäß einem der Ansprüche 1 oder 2, wobei die Haltewände (105, 105a, 105b, 205) und/oder die Verbindungswände (104, 204) jeweils in mindestens einem Abschnitt eine Stärke (d₁, d₂) haben, die mindestens 1mm und/oder höchstens 4mm beträgt, bevorzugter mindestens 1,5mm und/oder höchstens 3mm.

4. Kupplung gemäß einem der vorhergehenden Ansprüche, wobei sich die Haltewände (105, 105a, 105b, 205) in axialer Richtung über mindestens 1cm, bevorzugter über mindestens 1,5cm erstrecken.

5. Kupplung gemäß einem der vorhergehenden Ansprüche, wobei sich die Verbindungswände (104, 204) in axialer Richtung (A) weniger weit erstrecken als die Haltewände (105, 105a, 105b, 205).

6. Kupplung gemäß einem der vorhergehenden Ansprüche, wobei die Verbindungswände (104, 204) jeweils einen im Wesentlichen wellenförmigen Querschnitt haben.

7. Kupplung gemäß einem der vorhergehenden Ansprüche, wobei der Innenkranz (101, 201), der Außenkranz (102, 202), die Verbindungswände (104, 204) und die Haltewände (105, 105a, 105b, 205) alle aus demselben einheitlichen Material bestehen.

8. Küchengerätekomponente (2) zum Anschluss an einen Elektromotor eines Küchengeräts, wobei die Küchengerätkomponente eine Kupplung (10, 20, 30) gemäß einem der vorhergehenden Ansprüche umfasst.

9. Küchengerät (1) mit einem Elektromotor (4) und einer Küchengerätekomponente (2) gemäß Anspruch 8.

## Claims

1. Coupling (10, 20, 30) for a kitchen appliance with an electric motor, for transmission of a rotational movement caused by the electric motor to a kitchen appliance component, wherein the coupling comprises:
- an inner rim (101, 201) which is designed to enclose a shaft of the kitchen appliance;
- an outer rim (102, 202) which is arranged coaxially around the inner rim (101, 201) and is connected to the inner rim by connecting walls (104, 204); **characterised in that**
- a plurality of force transmission elements (103, 203) which are designed to enter into operative connection with respective counterparts for the transmission of the rotational movement, and which are each connected to the outer rim (102, 202) by at least one retaining wall (105, 105a, 105b, 205);
wherein the retaining walls (105, 105a, 105b, 205) are formed flexibly in the radial direction and/or wherein the connecting walls (104, 204) are formed flexibly in the circumferential direction (U).

2. Coupling according to claim 1, wherein at least one of the force transmission elements (103, 203) is connected to the outer rim (102, 202) by two of the retaining walls (105a, 105b), wherein the two retaining walls are arranged offset from one another in the circumferential direction (U) on the outer rim.

3. Coupling according to one of claims 1 or 2, wherein the retaining walls (105, 105a, 105b, 205) and/or the connecting walls (104, 204) each have a thickness (di, d₂) in at least one section which is at least 1 mm and/or is at most 4 mm, more preferably at least 1.5 mm and/or at most 3 mm.

4. Coupling according to one of the preceding claims, wherein the retaining walls (105, 105a, 105b, 205) extend in the axial direction over at least 1 cm, more preferably over at least 1.5 cm.

5. Coupling according to one of the preceding claims, wherein the connecting walls (104, 204) extend less far in the axial direction (A) than the retaining walls (105, 105a, 105b, 205).

6. Coupling according to one of the preceding claims, wherein the connecting walls (104, 204) each have a substantially undulating cross-section.

7. Coupling according to one of the preceding claims, wherein the inner rim (101, 201), the outer rim (102, 202), the connecting walls (104, 204) and the retaining walls (105, 105a, 105b, 205) all consist of the same uniform material.

8. Kitchen appliance component (2) for connection to an electric motor of a kitchen appliance, wherein the kitchen appliance component comprises a coupling (10, 20, 30) according to one of the preceding claims.

9. Kitchen appliance (1) with an electric motor (4) and a kitchen appliance component (2) according to claim 8.

## Revendications

1. Accouplement (10, 20, 30) pour un appareil de cuisine comprenant un moteur électrique, destiné à la transmission d'un mouvement rotatif produit par le moteur électrique sur un accessoire d'appareil de cuisine,
dans lequel l'accouplement comprend :
- une couronne intérieure (101, 201) qui est configurée pour entourer un arbre de l'appareil de cuisine de façon à résister à la torsion,
- une couronne extérieure (102, 202) qui est disposée de façon coaxiale autour de la couronne intérieure (101, 201) et qui est reliée à la couronne intérieure par des parois de liaison (104, 204),
**caractérisé en ce qu'**il comprend en outre :
une pluralité d'éléments de transmission de force (103, 203) qui sont conçus pour venir en liaison active avec des contre-éléments respectifs afin de transmettre le mouvement rotatif et qui sont reliés respectivement par au moins une paroi de support (105, 105a, 105b, 205) à la couronne extérieure (102, 202),
dans lequel les parois de support (105, 105a, 105b, 205) sont formées de façon flexible dans la direction radiale et/ou dans lequel les parois de liaison (104, 204) sont formées de façon flexible dans la direction périphérique (U).

2. Accouplement selon la revendication 1, dans lequel au moins un des éléments de transmission de force (103, 203) est relié à la couronne extérieure (102, 202) par deux des parois de support (105a, 105b), dans lequel les deux parois de support sont disposées sur la couronne extérieure de façon décalée l'une vis-à-vis de l'autre dans la direction périphérique (U).

3. Accouplement selon la revendication 1 ou 2, dans lequel les parois de support (105, 105a, 105b, 205) et/ou les parois de liaison (104, 204) ont chacune dans au moins une section une épaisseur (di, d₂), qui est d'au moins 1 mm et/ou d'au plus 4 mm, de préférence d'au moins 1,5 mm et/ou d'au plus 3 mm.

4. Accouplement selon l'une des revendications précédentes, dans lequel les parois de support (105, 105a, 105b, 205) s'étendent en direction axiale sur au moins 1 cm, de préférence au moins 1,5 cm.

5. Accouplement selon l'une des revendications précédentes, dans lequel les parois de liaison (104, 204) s'étendent moins loin en direction axiale (A) que les parois de support (105, 105a, 105b, 205).

6. Accouplement selon l'une des revendications précédentes, dans lequel les parois de liaison (104, 204) ont chacune une section transversale essentiellement ondulée.

7. Accouplement selon l'une des revendications précédentes, dans lequel la couronne intérieure (101, 201), la couronne extérieure (102, 202), les parois de liaison (104, 204) et les parois de support (105, 105a, 105b, 205) sont toutes constituées du même matériau uniforme.

8. Accessoire d'appareil de cuisine (2) à raccorder à un moteur électrique d'un appareil de cuisine, dans lequel l'accessoire d'appareil de cuisine comprend un accouplement (10, 20, 30) selon l'une des revendications précédentes.

9. Appareil de cuisine (1) comprenant un moteur électrique (4) et un accessoire d'appareil de cuisine (2) selon la revendication 8.
